# EUROPÄISCHE PATENTSCHRIFT

(11) **EP 1 925 046 B1**
(45) Veröffentlichungstag und Bekanntmachung des Hinweises auf die Patenterteilung: **15.04.2009**
(21) Anmeldenummer: 06776273.2
(22) Anmeldetag: 18.07.2006
(51) Int. Cl.: H01M 2/06, H01M 2/10, H02J 7/00, A47L 9/28

(54) **WIEDERAUFLADBARE BATTERIE**
RECHARGEABLE BATTERY
BATTERIE RECHARGEABLE

(30) Priorität: 13.09.2005 DE 102005045656
(43) Veröffentlichungstag der Anmeldung: 28.05.2008
(73) Patentinhaber: Alfred Kärcher GmbH & Co. KG, 71364 Winnenden (DE)
(72) Erfinder: HENSEL, Maic, 71522 Backnang (DE); WEISS, Jürgen, 71364 Winnenden (DE); DIEHL, Ralph, 73666 Baltmannsweiler (DE); SCHMIDGALL, Martin, 71546 Aspach (DE); LEPOLD, Holger, 71397 Nellmersbach (DE)
(74) Vertreter: Karrais, Martin
(86) Internationale Anmeldenummer: PCT/EP2006/007040
(87) Internationale Veröffentlichungsnummer: WO 2007/031143

(56) Entgegenhaltungen:
- EP-A1- 1 025 962
- DE-A1-9102004 036 20
- JP-A- 2003 235 771
- US-A1- 2002 089 306
- US-A1- 2003 090 234

## Beschreibung

Die Erfindung betrifft eine wiederaufladbare Batterie mit einem Batteriegehäuse, das eine Rückwand aufweist mit einer Vertiefung, die sich bis zu einer Stirnwand des Batteriegehäuses erstreckt und eine Grundseite sowie einander gegenüberliegende Schmalseiten aufweist, wobei die Grundseite über eine Stufe in die Außenseite der Rückwand übergeht und an der Stufe eine Kontaktanordnung gehalten ist, die von einer von der Stufe ausgehenden Abdeckung überdeckt ist.

Derartige wiederaufladbare Batterien kommen bei kabellosen Elektrogeräten, insbesondere bei Elektrowerkzeugen, zum Beispiel bei batteriebetriebenen Staubsaugern zum Einsatz. Die Batterien sind mit dem Elektrogerät lösbar verbindbar und können zum Laden vom Elektrogerät getrennt und mittels eines Ladegerätes aufgeladen werden. Die Batterien weisen eine Vielzahl von Zellen auf, die im Batteriegehäuse angeordnet sind, und zur Herstellung einer elektrischen Verbindung zwischen der Batterie und dem Elektrogerät bzw. dem Ladegerät kommt eine Kontaktanordnung zum Einsatz.

Aus der Offenlegungsschrift DE 102 29 980 A1 ist eine Batterie bekannt, bei der die Kontaktanordnung in Form von an der Rückwand offen angeordneter Kontaktelemente ausgestaltet ist. Die Kontaktelemente sind von außen auf einfache Weise kontaktierbar, sie sind allerdings nicht vor mechanischen oder sonstigen Einwirkungen geschützt.

Aus der Offenlegungsschrift DE 10 2004 036 209 A1 ist eine Batterie der eingangs genannten Art bekannt. Zum Schutz vor mechanischen Beeinträchtigungen der Kontaktanordnung kommt eine Abdeckung zum Einsatz, die die Kontaktanordnung überdeckt und die zusammen mit der Kontaktanordnung in einer Vertiefung der Rückwand angeordnet ist. Dadurch kann die Kontaktanordnung vor mechanischen Beeinträchtigungen weitgehend geschützt werden, allerdings besteht die Gefahr, daß die Kontaktanordnung während des Betriebs des Elektrogeräts mit eventuell auftretendem Spritzwasser in Berührung kommt. Dies kann eine elektrische Störung zur Folge haben.

Aufgabe der vorliegenden Erfindung ist es, eine wiederaufladbare Batterie der eingangs genannten Art derart weiterzubilden, daß die Kontaktanordnung bei Verbindung der Batterie mit einem Elektrogerät auf konstruktiv einfache Weise vor Spritzwasser geschützt werden kann.

Diese Aufgabe wird bei einer wiederaufladbaren Batterie der gattungsgemäßen Art erfindungsgemäß dadurch gelöst, daß die Abdeckung ein die Kontaktanordnung in Umfangsrichtung vollständig umgebendes Kontaktgehäuse ausbildet, das auf seiner der Stufe abgewandten Seite eine Einführöffnung aufweist, die von einem eine Dichtfläche ausbildenden umlaufenden Rand des Kontaktgehäuses umgeben ist.

Durch die Bereitstellung eines umlaufenden Randes, der die Einführöffnung des Kontaktgehäuses in Umfangsrichtung vollständig umgibt, kann die Kontaktanordnung bei Verbindung der Batterie mit einem Elektrogerät auf einfache Weise mittels eines Dichtrings vor Spritzwasser geschützt werden. Der umlaufende Rand bildet eine Dichtfläche aus, auf die der Dichtring aufgesetzt werden kann. Da das Kontaktgehäuse mit Ausnahme der Einführöffnung keine weitere von außen zugängliche Öffnung aufweist und unmittelbar an der Stufe, über die die Grundseite der Vertiefung in die Außenseite der Rückwand des Batteriegehäuses übergeht, anliegt, ist somit die Kontaktanordnung sehr gut vor mechanischer Beeinträchtigung geschützt und es kann durch Verbinden der Batterie mit einem Elektrogerät unter Zwischenlage eines Dichtrings auf einfache Weise ein optimaler Spritzwasserschutz für die Kontaktanordnung erzielt werden.

Vorzugsweise ist das Kontaktgehäuse quaderförmig ausgebildet und weist eine auf der Grundseite der Vertiefung flächig aufliegende Bodenwand, eine parallel zur Bodenwand und in der Ebene der Außenseite der Rückwand des Batteriegehäuses angeordnete Deckwand sowie senkrecht zur Rückwand ausgerichtete, jeweils einer Schmalseite der Vertiefung zugewandte Seitenwände aufweist.

Bevorzugt ist das Kontaktgehäuse einstückig mit dem Batteriegehäuse verbunden, bildet jedoch eine eigenständige Anordnung aus, unabhängig von der Vertiefung der Rückwand des Batteriegehäuses. Insbesondere wird die Bodenwand des Kontaktgehäuses nicht etwa von der Grundseite der Vertiefung gebildet, sondern es kommt eine separate Bodenwand des Kontaktgehäuses zum Einsatz. Der umlaufende Rand, der die Einführöffnung des Kontaktgehäuses in Umfangsrichtung umgibt, wird bei einer derartigen Ausgestaltung von den freien, der Stirnwand des Batteriegehäuses zugewandten Endkanten der genannten Wände des Kontaktgehäuses gebildet. Auf dem umlaufenden Rand kann bei der Montage der Batterie an einem Elektrogerät ein Dichtring aufgelegt werden.

Die Kontaktanordnung kann mehrere Kontaktelemente aufweisen, die beispielsweise in Form von Kontaktfedern oder Kontaktstiften ausgestaltet sein können. Von Vorteil ist es, wenn das Kontaktgehäuse eine senkrecht zur Bodenwand ausgerichtete und sich von der Stufe bis zur Einführöffnung erstreckende Zwischenwand aufweist, die den Innenraum des Kontaktgehäuses in einen ersten und einen zweiten Kontaktraum unterteilt. Mittels der Zwischenwand können unterschiedliche Kontaktelemente der Kontaktanordnung mechanisch und elektrisch auf einfache Weise voneinander getrennt werden.

Es kann vorgesehen sein, daß die Kontaktanordnung vier Kontaktelemente umfaßt, wobei im ersten Kontaktraum ein einziges Kontaktelement und im zweiten Kontaktraum drei in einer Reihe nebeneinander angeordnete Kontaktelemente positioniert sind. Eine elektrische Verbindung zwischen dem im ersten Kontaktraum angeordneten Kontaktelement und den im zweiten Kontaktraum angeordneten Kontaktelementen wird durch die Zwischenwand zuverlässig verhindert.

Das im ersten Kontaktraum angeordnete Kontaktelemente bildet bevorzugt einen ersten Spannungsanschluß, insbesondere den Pluspol, der Batterie aus, und das Kontaktelement, das in der Reihe der drei im zweiten Kontaktraum angeordneten Kontaktelemente mittig angeordnet ist, bildet bevorzugt einen zweiten Spannungsanschluß, insbesondere den Minuspol, der Batterie aus. Die beiden Spannungsanschlüsse sind somit durch die Zwischenwand voneinander getrennt, und innerhalb des zweiten Kontaktraums ist das einen Spannungsanschluß der Batterie ausbildende Kontaktelement von zwei weiteren Kontaktelementen umgeben.

Hierbei kann vorgesehen sein, daß die seitlich neben dem zweiten Spannungsanschluß, beispielsweise dem Minuspol, angeordneten Kontaktelemente als Meßfühler ausgestaltet sind. Mittels der Meßfühler können von der Batterie Meßsignale abgegriffen und dem Ladegerät oder dem Elektrogerät bereitgestellt werden. Beispielsweise kann mittels eines Meßfühlers der Ladezustand der Batterie geprüft und einer Anzeigeeinrichtung des Elektrogeräts oder des Ladegeräts zugeführt werden.

Bei einer vorteilhaften Ausführungsform ist das unmittelbar neben der Zwischenwand angeordnete Kontaktelement des zweiten Kontaktraums als Temperaturmeßfühler ausgestaltet. Mittels des Temperaturmeßfühlers kann die innerhalb des Batteriegehäuses herrschende Temperatur abgegriffen werden.

Das zur Zwischenwand maximal beabstandete Kontaktelement des zweiten Kontaktraums ist vorzugsweise als Widerstandsmeßfühler ausgestaltet. Mittels des Widerstandsmeßfühlers kann beispielsweise vom Ladegerät ein der Batterie-Nennspannung entsprechender Widerstand der Batterie abgegriffen werden. Der abgegriffene Widerstandswert kann vom Ladegerät mit einem in einer Tabelle hinterlegten Widerstandswert verglichen werden, der einer bestimmten Batterie-Nennspannung entspricht. Somit kann auf einfache Weise festgestellt werden, ob die Batterie eine Nennspannung von beispielsweise 12 V oder 24 V bereitstellt.

Zur Herstellung einer lösbaren Verbindung zwischen der Batterie und dem Elektrogerät bzw. dem Ladegerät ist bei einer vorteilhaften Ausführungsform der Erfindung an den Schmalseiten der Vertiefung jeweils ein Verbindungsglied angeordnet. Als Elektrogerät kann insbesondere ein Staubsauger, ein Hochdruckreinigungsgerät oder ein elektromotorisch angetriebenes Kehrgerät zum Einsatz kommen. Von Vorteil ist es, wenn sich das Verbindungsglied lediglich innerhalb der Vertiefung erstreckt, nicht jedoch über die Außenseite der Rückwand des Batteriegehäuses nach außen vorsteht. Ebenso wie das in der Vertiefung angeordnete Kontaktgehäuse sind somit auch die Verbindungsglieder vor mechanischen Beeinträchtigungen geschützt, falls die wiederaufladbare Batterie versehentlich zu Boden fällt. Die Gefahr einer Beschädigung der Verbindungsglieder wird somit gering gehalten.

Die Verbindungsglieder sind vorzugsweise als einander zugewandte Führungsrippen ausgestaltet, die im Abstand zur Grundseite der Vertiefung angeordnet sind und sich bis in Höhe der Außenseite der Rückwand des Batteriegehäuses erstrecken.

Von besonderem Vorteil ist es, wenn die Führungsrippen zusammen mit der Außenseite der Rückwand des Batteriegehäuses und der Deckwand des Kontaktgehäuses eine Anlageebene definieren zur Anlage der Batterie an einer Stützfläche des Elektrogeräts. Die Anlageebene ermöglicht eine flächige Anlage der Batterie an der Stützfläche und dadurch eine besonders stabile Halterung der Batterie. Das Elektrowerkzeug kann ein mit der Vertiefung der Rückwand und dem Kontaktgehäuse korrespondierendes Anschlußteil aufweisen mit Anschlußelementen, die über die Einführöffnung in das Kontaktgehäuse der Batterie einführbar sind. Vorzugsweise sind die Anschlußelemente als Steckbuchsen ausgebildet, die die als Kontaktfedern oder Kontaktstifte ausgestalteten Kontaktelemente der Kontaktanordnung aufnehmen. Das Anschlußteil des Elektrogeräts kann eine dem umlaufenden Rand des Kontaktgehäuses entsprechende Anlagefläche aufweisen, die eine Dichtfläche ausbildet für einen zwischen der Anlagefläche und dem umlaufenden Rand positionierbaren Dichtring. Die Anschlußelemente des Elektrogeräts können somit ebenso wie die Kontaktelemente der Batterie auf einfache Weise vor Spritzwasser geschützt werden.

Die nachfolgende Beschreibung einer bevorzugten Ausführungsform der Erfindung dient im Zusammenhang mit der Zeichnung der näheren Erläuterung. Es zeigen:

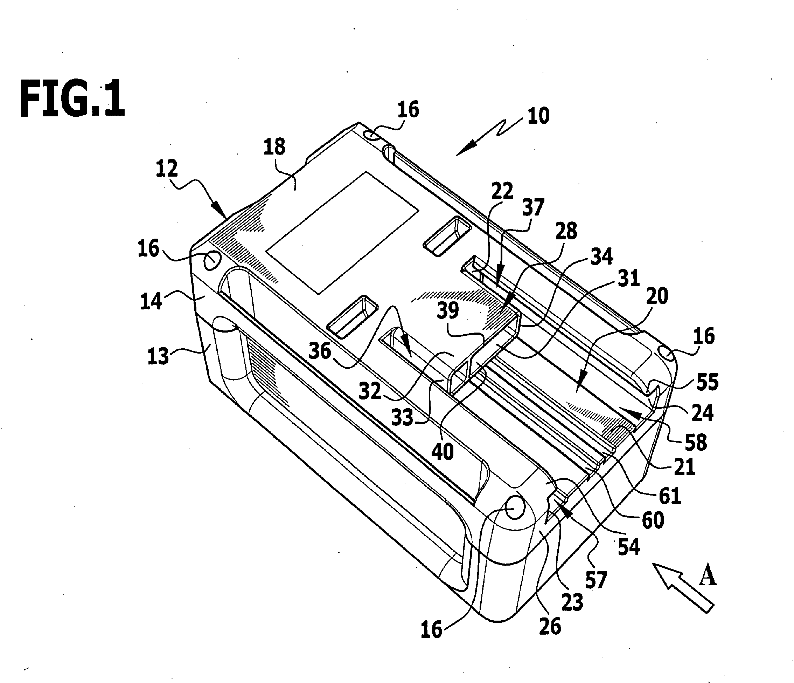

- Figur 1:: eine schaubildliche Darstellung einer erfindungsgemäßen wiederaufladbaren Batterie; und

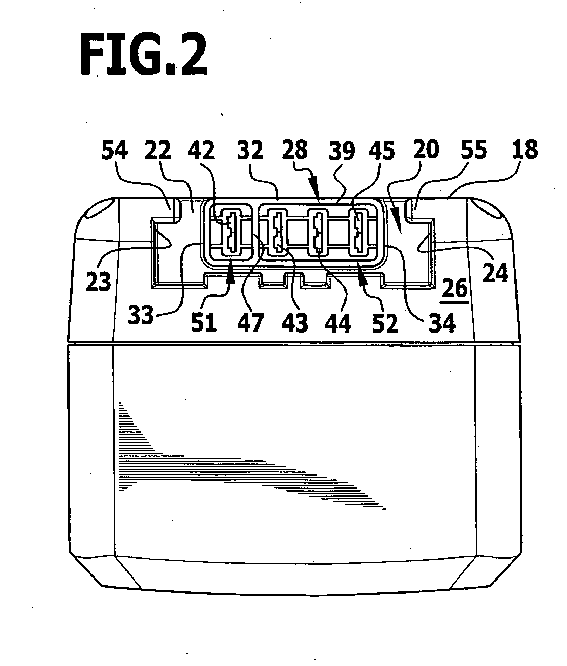

- Figur 2:: eine Seitenansicht in Richtung von Pfeil A aus Figur 1.

In der Zeichnung ist schematisch eine erfindungsgemäße wiederaufladbare Batterie 10 dargestellt, die quaderförmig ausgestaltet ist und ein Batteriegehäuse 12 aufweist mit einem wannenförmigen Gehäuseunterteil 13 und einem deckelförmigen Gehäuseoberteil 14, das auf das Gehäuseunterteil 13 aufgesetzt und mittels Verbindungsschrauben 16 mit dem Gehäuseunterteil verschraubt ist. Das Batteriegehäuse nimmt eine Vielzahl von an sich bekannter und deshalb in der Zeichnung nicht dargestellter Zellen auf und kann mit einem Elektrogerät zu dessen Energieversorgung elektrisch und mechanisch verbunden werden. Als Zellen kommen beispielsweise Nickel-Cadmium oder Nickel-Metall-Hybrid-Batteriezellen oder Lithium-Ionen-Zellen zum Einsatz. Da die Batterie mit dem Elektrogerät lösbar verbindbar ist, kann sie zum Laden vom Elektrogerät getrennt und in einem Ladegerät aufgeladen werden. Derartige Ladegeräte sind dem Fachmann bekannt.

Die Oberseite des Gehäuseoberteils 14 bildet eine Rückwand 18 des Batteriegehäuses 12, mit dessen Außenseite die Batterie 10 beim Verbinden mit einem Elektrogerät an eine Stützwand des Elektrogeräts flächig angelegt werden kann. In die Rückwand 18 ist eine Vertiefung 20 eingeformt mit einer Grundseite 21, die über eine Stufe 22 in die Rückwand 18 übergeht, sowie mit zwei einander gegenüberliegenden Schmalseiten 23, 24. Ausgehend von der Stufe 22 erstreckt sich die Vertiefung 20 bis zu einer Stirnseite 26 des Batteriegehäuses 12, so daß ausgehend von der Stirnseite 26 ein Anschlußteil des Elektrogeräts in die Vertiefung 20 eingesetzt werden kann. An der Stufe 20 liegt ein Kontaktgehäuse 28 an, das einstückig mit dem Gehäuseoberteil 14 verbunden ist und eine flächig auf der Grundseite 21 der Vertiefung 20 aufliegende Bodenwand 31, eine parallel zu dieser verlaufende Deckwand 32 sowie die Bodenwand 31 mit der Deckwand 32 verbindende Seitenwände 33 und 34 aufweist. Die Deckwand 32 verläuft in der Ebene der Rückwand 18 und die Seitenwände 33, 34 sind senkrecht zur Rückwand 18 ausgerichtet. Zwischen den Seitenwänden 33, 34 und der jeweilig benachbarten Schmalseite 23 bzw. 24 erstreckt sich jeweils ein Einführkanal 36 bzw. 37 bis zur Stufe 22.

Die der Stufe 22 abgewandten freien Endkanten der Bodenwand 31, Deckwand 32 sowie der Seitenwände 33 und 34 bilden einen umlaufenden Rand 39, der eine der Stufe 22 abgewandte Einführöffnung 40 des Kontaktgehäuses 28 in Umfangsrichtung vollständig umgibt. Der Rand 39 bildet eine Dichtfläche aus, an die beim Verbinden der Batterie mit einem Elektrogerät ein Dichtring angelegt werden kann.

Das Kontaktgehäuse 28 nimmt eine Kontaktanordnung in Form von insgesamt vier als Kontaktfedern ausgebildeten Kontaktelemente 42, 43, 44, 45 auf, die in Umfangsrichtung vollständig vom Kontaktgehäuse 28 umgeben sind. Zwischen einem ersten Kontaktelement 42 und den drei weiteren Kontaktelementen 43, 44, 45 erstreckt sich zwischen der Bodenwand 31 und der Deckwand 32 des Kontaktgehäuses 28 eine Zwischenwand 47, durch die der Innenraum des Kontaktgehäuses 28 in einen ersten Kontaktraum 51 und einen zweiten Kontaktraum 52 unterteilt wird. Der erste Kontaktraum 51 nimmt lediglich das Kontaktelement 42 auf, das einen ersten Spannungsanschluß, bevorzugt den Pluspol, der Batterie 10 ausbildet.

Der zweite Kontaktraum 52 nimmt die Kontaktelemente 43, 44 und 45 auf, die in einer Reihe nebeneinander angeordnet sind. Das in dieser Reihe mittig angeordnete Kontaktelement 44 bildet einen zweiten Spannungsanschluß der Batterie, vorzugsweise deren Minuspol aus, wohingegen die seitlich neben dem Kontaktelement 44 angeordneten Kontaktelemente 43 und 45 jeweils einen Meßfühler ausbilden. Das unmittelbar neben der Zwischenwand 47 angeordnete Kontaktelement 43 ist als Temperaturmeßfühler ausgestaltet, mit dessen Hilfe die in der Batterie 10 herrschende Temperatur abgegriffen werden kann. Das Kontaktelement 45, das auf der der Zwischenwand 47 abgewandten Seite des Kontaktelements 44 angeordnet ist, ist als Widerstandsmeßfühler ausgebildet, mit dessen Hilfe ein Widerstand der Batterie 10 abgegriffen werden kann, der der Nennspannung der Batterie entspricht. Durch Vergleich des abgegriffenen Widerstandswerts mit Widerstandswerten, die in einer Tabelle hinterlegt sind und denen jeweils ein bestimmter Spannungswert für die Batterie-Nennspannung zugeordnet ist, kann zum Beispiel von einem Ladegerät auf einfache Weise die Nennspannung der Batterie ermittelt werden, die Nennspannung kann beispielsweise 12 V, 24 V oder auch 36 V betragen.

An den einander gegenüberliegenden Schmalseiten 23, 24 der Vertiefung 20 ist jeweils ein sich über die gesamte Länge der Schmalseiten 23, 24 erstrekkendes Verbindungsglied in Form einer vorstehenden Führungsrippe 54 bzw. 55 angeordnet. Die Führungsrippen 54, 55 sind einander zugewandt und im Abstand zur Grundseite 21 angeordnet, so daß zwischen den Führungsrippen 54 bzw. 55 und der Grundseite 21 der Vertiefung 20 jeweils eine Führungsnut 57 bzw. 58 verläuft.

Die Führungsrippen 54, 55 erstrecken sich bis in Höhe der Außenseite der Rückwand 18 und der Deckwand 32 und bilden mit diesen Wänden gemeinsam eine ebene Anlagefläche zur Anlage der Batterie 10 an eine korrespondierende Stützfläche des Elektrogeräts, mit dem die Batterie 10 lösbar verbindbar ist.

In die Grundseite 21 sind in der dargestellten Ausführungsform zwei parallel zueinander ausgerichtete Kodiernuten 60, 61 eingeformt, die sich ausgehend vom umlaufenden Rand 39 des Kontaktgehäuses 28 bis zur Stirnseite 26 des Batteriegehäuses 12 erstrecken.

Zur Herstellung einer elektrischen und mechanischen Verbindung der Batterie 10 mit einem Elektrogerät kann ein Anschlußteil des Elektrogeräts ausgehend von der Stirnseite 26 in die Vertiefung 20 eingeführt werden, wobei Führungsschienen des Anschlußteils in die Führungsnuten 57 und 58 eingreifen und Anschlußelemente des Elektrogeräts, beispielsweise Anschlußbuchsen, über die Einführöffnung 40 in den ersten Kontaktraum 51 und den zweiten Kontaktraum 52 des Kontaktgehäuses 28 eingeführt werden können. Bevor die korrespondierenden Anschlußelemente in den Innenraum des Kontaktgehäuses 28 eingeführt werden, kann auf den umlaufenden Rand 39 ein Dichtring aufgelegt werden, der einerseits an den eine Dichtfläche ausbildenden umlaufenden Rand 39 und andererseits an einen korrespondierenden Rand des Anschlußteils des Elektrogeräts angelegt werden kann, so daß die Kontaktelemente 42, 43, 44 und 45 sowie die korrespondierenden Anschlußelemente des Elektrogeräts zuverlässig vor Spritzwasser geschützt sind.

## Patentansprüche

1. Wiederaufladbare Batterie mit einem Batteriegehäuse, das eine Rückwand aufweist mit einer Vertiefung, die sich bis zu einer Stirnwand des Batteriegehäuses erstreckt und eine Grundseite sowie einander gegenüberliegende Schmalseiten aufweist, wobei die Grundseite über eine Stufe in die Außenseite der Rückwand übergeht und an der Stufe eine Kontaktanordnung positioniert ist, die von einer von der Stufe ausgehenden Abdeckung überdeckt ist, **dadurch gekennzeichnet, daß** die Abdeckung ein die Kontaktanordnung (42, 43, 44, 45) in Umfangsrichtung vollständig umgebendes Kontaktgehäuse (28) ausbildet, das auf seiner der Stufe (22) abgewandten Seite eine Einführöffnung (40) aufweist, die von einem eine Dichtfläche ausbildenden umlaufenden Rand (39) des Kontaktgehäuses (28) umgeben ist.

2. Wiederaufladbare Batterie nach Anspruch 1, **dadurch gekennzeichnet, daß** das Kontaktgehäuse (28) quaderförmig ausgebildet ist und eine auf der Grundseite (21) der Vertiefung (20) flächig aufliegende Bodenwand (31), eine parallel zur Bodenwand (31) und in der Ebene der Außenseite der Rückwand (18) des Batteriegehäuses (12) angeordnete Deckwand (32) sowie senkrecht zur Rückwand (18) ausgerichtete, jeweils einer Schmalseite (23, 24) zugewandte Seitenwände (33, 34) aufweist.

3. Wiederaufladbare Batterie nach Anspruch 2, **dadurch gekennzeichnet, daß** das Kontaktgehäuse (28) eine senkrecht zur Bodenwand (31) ausgerichtete und sich von der Stufe (22) bis zur Einführöffnung (40) erstreckende Zwischenwand (47) aufweist, die den Innenraum des Kontaktgehäuses (28) in einen ersten und einen zweiten Kontaktraum (51, 52) unterteilt.

4. Wiederaufladbare Batterie nach Anspruch 3, **dadurch gekennzeichnet, daß** die Kontaktanordnung vier Kontaktelemente (42, 43, 44, 45) umfaßt, wobei im ersten Kontaktraum (51) ein einziges Kontaktelement (42) und im zweiten Kontaktraum (52) drei in einer Reihe nebeneinander angeordnete Kontaktelemente (43, 44, 45) positioniert sind.

5. Wiederaufladbare Batterie nach Anspruch 4, **dadurch gekennzeichnet, daß** das im ersten Kontaktraum (51) angeordnete Kontaktelement (42) einen ersten Spannungsanschluß der Batterie (10) ausbildet und daß das in der Reihe der drei Kontaktelemente (43, 44, 45) des zweiten Kontaktraums (52) mittig angeordnete Kontaktelement (44) einen zweiten Spannungsanschluß der Batterie (10) ausbildet.

6. Wiederaufladbare Batterie nach Anspruch 5, **dadurch gekennzeichnet, daß** die seitlich neben dem zweiten Spannungsanschluß (44) angeordneten Kontaktelemente (43, 45) als Meßfühler ausgestaltet sind.

7. Wiederaufladbare Batterie nach Anspruch 4, 5 oder 6, **dadurch gekennzeichnet, daß** das unmittelbar neben der Zwischenwand (47) angeordnete Kontaktelement (43) des zweiten Kontaktraums (52) als Temperaturmeßfühler ausgestaltet ist.

8. Wiederaufladbare Batterie nach einem der Ansprüche 4 bis 7, **dadurch gekennzeichnet, daß** das zur Zwischenwand (47) maximal beabstandete Kontaktelement (45) des zweiten Kontaktraums (52) als Widerstandsmeßfühler ausgestaltet ist.

9. Wiederaufladbare Batterie nach einem der voranstehenden Ansprüche, **dadurch gekennzeichnet, daß** an den Schmalseiten (23, 24) der Vertiefung jeweils ein Verbindungsglied (54, 55) angeordnet ist zum lösbaren Verbinden der Batterie (10) mit einem Elektrogerät, insbesondere einem Staubsauger, einem Hochdruckreinigungsgerät oder einem elektromotorisch angetriebenen Kehrgerät.

10. Wiederaufladbare Batterie nach Anspruch 9, **dadurch gekennzeichnet, daß** die Verbindungsglieder als einander zugewandte Führungsrippen (54, 55) ausgestaltet sind, die im Abstand zur Grundseite (21) der Vertiefung (20) angeordnet sind und sich bis in Höhe der Außenseite der Rückwand (18) des Batteriegehäuses (12) erstrecken.

11. Wiederaufladbare Batterie nach Anspruch 10, **dadurch gekennzeichnet, daß** die Führungsrippen (54, 55) zusammen mit der Außenseite der Rückwand (18) des Batteriegehäuses (12) und der Deckwand (32) des Kontaktgehäuses (28) eine Anlageebene definieren zur Anlage der Batterie (10) an eine Stützfläche eines Elektrogeräts.

## Claims

1. Rechargeable battery with a battery housing having a rear wall with a recess which extends as far as an end wall of the battery housing and has a base side and narrow sides facing each other, the base side continuing via a step into the outer side of the rear wall, and a contact assembly which is covered by a cover extending from the step being positioned at the step, **characterized in that** the cover forms a contact housing (28) which completely surrounds the contact assembly (42, 43, 44, 45) in circumferential direction and has on its side facing away from the step (22) an insertion opening (40) surrounded by a circumferential rim (39) of the contact housing (28), which forms a sealing surface.

2. Rechargeable battery in accordance with claim 1, **characterized in that** the contact housing (28) is of parallelepipedal configuration and has a bottom wall (31) resting with surface-to-surface contact on the base side (21) of the recess (20), a cover wall (32) arranged parallel to the bottom wall (31) and in the plane of the outer side of the rear wall (18) of the battery housing (12), and side walls (33, 34) which are aligned perpendicularly to the rear wall (18), and each of which faces a narrow side (23, 24).

3. Rechargeable battery in accordance with claim 2, **characterized in that** the contact housing (28) has a partition wall (47), which is aligned perpendicularly to the bottom wall (31), extends from the step (22) to the insertion opening (40) and divides the interior of the contact housing (28) into a first and a second contact space (51, 52).

4. Rechargeable battery in accordance with claim 3, **characterized in that** the contact assembly comprises four contact elements (42, 43, 44, 45), a single contact element (42) being positioned in the first contact space (51), and three contact elements (43, 44, 45) arranged next to one another in a row being positioned in the second contact space (52).

5. Rechargeable battery in accordance with claim 4, **characterized in that** the contact element (42) arranged in the first contact space (51) forms a first voltage connection of the battery (10), and **in that** the contact element (44) arranged in the middle of the row of three contact elements (43, 44, 45) of the second contact space (52) forms a second voltage connection of the battery (10).

6. Rechargeable battery in accordance with claim 5, **characterized in that** the contact elements (43, 45) arranged alongside the second voltage connection (44) are configured as sensors.

7. Rechargeable battery in accordance with claim 4, 5 or 6, **characterized in that** the contact element (43) of the second contact space (52), which is arranged immediately next to the partition wall (47), is configured as temperature sensor.

8. Rechargeable battery in accordance with any one of claims 4 to 7, **characterized in that** the contact element (45) of the second contact space (52), which is spaced maximally from the partition wall (47), is configured as resistance sensor.

9. Rechargeable battery in accordance with any one of the preceding claims, **characterized in that** a connecting member (54, 55) is arranged at each of the narrow sides (23, 24) of the recess for releasably connecting the battery (10) to an electrical appliance, in particular, a vacuum cleaner, a high-pressure cleaner or a sweeper driven by an electric motor.

10. Rechargeable battery in accordance with claim 9, **characterized in that** the connecting members are configured as guide ribs (54, 55) facing each other, which are arranged in spaced relation to the base side (21) of the recess (20) and extend as far as the level of the outer side of the rear wall (18) of the battery housing (12).

11. Rechargeable battery in accordance with claim 10, **characterized in that** the guide ribs (54, 55) together with the outer side of the rear wall (18) of the battery housing (12) and the cover wall (32) of the contact housing (28) define an abutment plane for abutment of the battery (10) on a supporting surface of an electrical appliance.

## Revendications

1. Batterie rechargeable comportant un boîtier de batterie qui présente une paroi arrière comportant une cavité qui s'étend jusqu'à une paroi frontale du boîtier de batterie et qui présente un côté de base ainsi que des côtés étroits opposés l'un à l'autre, le côté de base passant au-dessus d'un gradin prévu sur la face extérieure de la paroi arrière, et sur le gradin étant prévu un dispositif de contact qui est recouvert par un capotage partant du gradin, **caractérisée en ce que** le capotage forme un boîtier de contact (28) entourant entièrement le dispositif de contact (42, 43, 44, 45) dans la direction périphérique et qui présente, sur sa face opposée au gradin (22), une ouverture d'introduction (40) qui est entourée par un bord périphérique (39) du boîtier de contact (28) formant une surface d'étanchéité.

2. Batterie rechargeable selon la revendication 1, **caractérisée en ce que** le boîtier de contact (28) est réalisé pour être rectangulaire et présente une paroi de fond (31) reposant à plat sur le côté de base (21) de la cavité (20), une paroi supérieure (32) disposée parallèlement à la paroi de fond (31) et dans le plan de la face extérieure de la paroi arrière (18) du boîtier de batterie (12), ainsi que des parois latérales (33, 34) orientées perpendiculairement à la paroi arrière (18) et faisant chacune face à un des côtés étroits (23, 24).

3. Batterie rechargeable selon la revendication 2, **caractérisée en ce que** le boîtier de contact (28) présente une paroi intercalaire (47) orientée perpendiculairement à la paroi de fond (31) et s'étendant du gradin (22) jusqu'à l'ouverture d'introduction (40), et qui divise l'espace intérieur du boîtier de contact (28) en un premier et en un deuxième espaces de contact (51, 52).

4. Batterie rechargeable selon la revendication 3, **caractérisée en ce que** le dispositif de contact comprend quatre éléments de contact (42, 43, 44, 45), dont un unique élément de contact (42) est positionné dans le premier espace de contact (51), et dont trois éléments de contact (43, 44, 45) sont disposés en série les uns à côté des autres dans le deuxième espace de contact (52).

5. Batterie rechargeable selon la revendication 4, **caractérisée en ce que** l'élément de contact (42) disposé dans le premier espace de contact (51) forme un premier raccordement de tension de la batterie (10), et **en ce que** l'élément de contact (44) qui est disposé au milieu des trois éléments de contact (43, 44, 45) en série du deuxième espace de contact (52) forme un deuxième raccordement de tension de la batterie (10).

6. Batterie rechargeable selon la revendication 5, **caractérisée en ce que** les éléments de contact (43, 45) qui sont disposés latéralement de part et d'autre du deuxième raccordement de tension (44) sont réalisés sous la forme de capteurs de mesure.

7. Batterie rechargeable selon la revendication 4, 5 ou 6, **caractérisée en ce que** l'élément de contact (43) du deuxième espace de contact (52) qui est disposé directement contre la paroi intercalaire (47) est réalisé sous la forme d'un capteur de mesure de température.

8. Batterie rechargeable selon l'une des revendications 4 à 7, **caractérisé en ce que** l'élément de contact (45) du deuxième espace de contact (52) qui est le plus éloigné de la paroi intercalaire (47) est réalisé sous la forme d'un capteur de mesure de résistance.

9. Batterie rechargeable selon l'une des revendications précédentes, **caractérisée en ce que**, sur chacun des côtés étroits (23, 24) de la cavité, est prévu un élément de liaison (54, 55) pour la liaison amovible de la batterie (10) à un appareil électrique, en particulier un aspirateur, un appareil de nettoyage haute pression ou une balayeuse entraînée par un moteur électrique.

10. Batterie rechargeable selon la revendication 9, **caractérisée en ce que** les éléments de liaison sont réalisés sous la forme de nervures de guidage (54, 55) orientées face à face, qui sont disposées à distance du côté de base (21) de la cavité (20) et s'étendent en hauteur jusqu'à la face extérieure de la paroi arrière (18) du boîtier de batterie (12).

11. Batterie rechargeable selon la revendication 10, **caractérisée en ce que** les nervures de guidage (54, 55) définissent avec la face extérieure de la paroi arrière (18) du boîtier de batterie (12) et la paroi supérieure (32) du boîtier de contact (28) un plan d'installation pour l'installation de la batterie (10) sur une surface d'appui d'un appareil électrique.
